(19) Europäisches Patentamt
European Patent Office
Office européen des brevets

(11) Veröffentlichungsnummer: **0 486 579 B1**

(12) **EUROPÄISCHE PATENTSCHRIFT**

(45) Veröffentlichungstag der Patentschrift: **08.03.95**

(51) Int. Cl.6: **A63B 63/00**, A63B 69/00

(21) Anmeldenummer: **90912423.2**

(22) Anmeldetag: **08.08.90**

(86) Internationale Anmeldenummer:
**PCT/AT90/00079**

(87) Internationale Veröffentlichungsnummer:
**WO 91/01778 (21.02.91 91/05)**

(54) **VERFAHREN UND VORRICHTUNG ZUR BESTIMMUNG DER OPTIMALEN WURF-, SCHUSS- BZW. ABSPIELTRAININGSGESCHWINDIGKEIT BEI WURFSPORTARTEN BZW. BALLSPIELEN.**

(30) Priorität: **08.08.89 AT 1900/89**

(43) Veröffentlichungstag der Anmeldung:
**27.05.92 Patentblatt 92/22**

(45) Bekanntmachung des Hinweises auf die Patenterteilung:
**08.03.95 Patentblatt 95/10**

(84) Benannte Vertragsstaaten:
**AT BE CH DE DK ES FR GB IT LI LU NL SE**

(56) Entgegenhaltungen:
**DE-A- 1 478 054**
**DE-A- 2 527 771**
**DE-A- 2 932 100**
**FR-A- 2 135 512**
**US-A- 2 894 753**

(73) Patentinhaber: **Österreichisches Forschungszentrum Seibersdorf Ges.m.b.H.**
**Kramergasse 1**
**A-1010 Wien (AT)**

Patentinhaber: **HOLZER, Eduard**
**Badgasse 17**
**A-3562 Schönberg (AT)**

(72) Erfinder: **HOLZER, Eduard**
**Badgasse 17**
**A-3562 Schönberg (AT)**
Erfinder: **WALLISCH, Karl**
**Hardtmuthgasse 104/2/37**
**A-1100 Wien (AT)**
Erfinder: **ZEMANN, Helmut**
**Ottakringerstrasse 242/5/11**
**A-1160 Wien (AT)**
Erfinder: **SCHMESKAL Theodor**
**Ettenreichgasse 24**
**A-1100 Wien (AT)**

EP 0 486 579 B1

**Beschreibung**

Die Erfindung betrifft ein Verfahren Zur Bestimmung der optimalen Wurf-, Schuß- bzw. Abspieltrainingsgeschwindigkeit bei Wurfsportarten bzw. Ballspielen, wie z.B. Tennis, Tischtennis, Fußball, Handball, sowie auch gegebenenfalls Eishockey, Golf od.dgl., bei dem ein Sportgegenstand, z.B. ein Ball, möglichst nahe an einen vorbestimmten Zielpunkt geworfen, geschossen, abgeschlagen, gespielt od.dgl. in Bewegung gesetzt werden soll. Ferner betrifft die Erfindung eine Trainingsvorrichtung für Wurfsportarten bzw. Ballspiele, z.B. Tennis, Tischtennis, Handball od.dgl., die eine Meßeinrichtung für die Fluggeschwindigkeit eines in Richtung auf einen Zielpunkt geworfenen, geschossenen, abgeschlagenen, gespielten od.dgl. in Bewegung gesetzten Sportgegenstandes, vorzugsweise eines Balles, vorzugsweise einen Lichtvorhang oder akustische Meßeinrichtungen, z.B. auf das Abschuß- und Aufprallgeräusch ansprechende Mikrophone, eine Einrichtung zur Erkennung des Auftreffpunktes des Gegenstandes auf der Zielebene, z.B. einer Prallwand, und zur Feststellung der Lage bzw. des Abstandes des jeweiligen Auftreffpunktes von dem vorgegebenen Zielpunkt und eine Auswertungseinheit, z.B. einen Rechner, zur Berechnung der jeweiligen Abstände zwischen dem Zielpunkt und dem Auftreffpunkt des Gegenstandes umfaßt, der die Meßwerte der Meßeinrichtung für die Fluggeschwindigkeit zuführbar sind.

Aus der US-PS 2 894 753 ist eine Einrichtung bekannt, mit der einen Golfspieler, der einen Ball gegen eine Zielwand schlägt, die Flugbahn des Balles dargestellt wird, welche der Ball in freiem Flug genommen hätte. Damit kann insbesondere die Länge des Schlages angezeigt und dem Spieler bekanntgegeben werden. Mit einer derartigen Einrichtung kann ein Golfspieler seinen Schlag verbessern; Hinweise auf eine optimale Schlaggeschwindigkeit erhält der Golfspieler von dieser bekannten Einrichtung nicht.

Aus der DE-OS 25 27 771 ist eine Vorrichtung zur automatischen Ermittlung der Leistungsfähigkeit eines Ballspieles bekannt, bei der so vorgegangen wird, daß der Abstand des Auftreffpunktes des geworfenen Gegenstandes von einem vorgegebenen Zielpunkt ermittelt und gleichzeitig die Geschwindigkeit des Schusses festgestellt wird. In einer Auswerteeinheit wird sodann der Zusammenhang zwischen der Geschwindigkeit und dem Reziprokwert der Entfernung ermittelt und dieses Ergebnis als Leistungsfähigkeit dargestellt.

Ziel der Erfindung ist die Erstellung eines Verfahrens sowie einer Trainingseinrichtung der oben genannten Art, mit denen eine optimale Trainingsgeschwindigkeit, d.h. Wurf- bzw. Abspielgeschwindigkeit für den geworfenen bzw. geschossenen Gegenstand ermittelt werden kann, da der beste Lernerfolg dann eintritt, wenn man die Lerngeschwindigkeit in einem Bereich wählt, in dem die Spiel- bzw. Wurfungenauigkeiten am größten sind.

Dieses Ziel wird bei einem Verfahren der eingangs genannten Art erfindungsgemäß dadurch erreicht, daß für eine einen Meßdurchgang bildende bestimmte Anzahl von Würfen, Schüssen, Abspielen od.dgl., dem Trainierenden ein Sollwert für die Trainingsgeschwindigkeit vorgegeben wird, daß dieser Sollwert für aufeinanderfolgende Durchgänge jeweils neu festgesetzt wird, insbesondere eine Reihe von Durchgängen mit steigenden Sollwerten der Trainingsgeschwindigkeit abgewickelt wird, daß für jeden Durchgang in der Zielebene die Abstände der Auftreffpunkte des Sportgegenstandes vom Zielpunkt vermessen bzw. errechnet und, insbesondere statistisch, verknüpft bzw. ausgewertet, z.B. gemittelt, werden, daß aus den Abständen der Auftreffpunkte vom Zielpunkt und der Entfernung zwischen dem Abwurf- bzw. Abspielort des Sportgegenstandes und dem Zielpunkt der Winkelfehler zwischen der Tangente an der zum Zielpunkt führenden Flugbahn und (den) der (den) Tangente(n) der (den) zu den Auftreffpunkten bzw. zu dem sich bei Mitteilung der Abstände vom Zielpunkt ergebenden Punkt führenden Flugbahn(en) beim Ort des Abwurfes, Abschusses bzw. Abspielens errechnet wird und daß als optimale Trainingsgeschwindigkeit aus den Sollwerten der Trainingsgeschwindigkeiten die Geschwindigkeit ausgewählt bzw. bestimmt wird, z.B. auch durch Interpolation bestimmt wird, bei welcher dieser Winkelfehler am kleinsten ist.

Bei der erfindungsgemäßen Vorgangsweise bzw. bei der erfindungsgemäßen Trainingseinrichtung ist es nunmehr möglich, daß durch entsprechende Messungen der Entfernung, der Geschwindigkeit und Abweichungen der Treffer von einem vorgegebenen Zielpunkt eine optimale Trainingsgeschwindigkeit ermittelt und dem Trainierenden bzw. dessen Lehrer angezeigt werden, wonach das Training ausgerichtet wird. Es wird dem Trainierenden ein Sollwert für eine Trainingsgeschwindigkeit vorgegeben und nach einer Zurückrechnung der Schußgenauigkeit auf der Abspielort der Fehler am Abspielort festgestellt und in Abhängigkeit des Winkelfehlers dem Trainierenden eine neue Trainingsgeschwindigkeit vorgegeben. Der Auswertungsalgorithmus ist neuartig und führt zu völlig neuartigen Anweisungen für den Trainierenden, da es bislang nicht bekannt war, die Trainingsgeschwindigkeit vom Abspielfehler abhängig zu machen.

Zur Verbesserung der Auswertegenauigkeit kann gemäß den Kennzeichen der Patentansprüche 2 bzw. 4 vorgegangen werden. Bevorzugte Auswerteverfahren beschreiben die Patentansprüche 3 und 5.

Eine einfache Auswertung ergibt sich bei der Vorgangsweise gemäß Patentanspruch 6.

Vorteilhafte Weiterbildungen der Trainingseinrichtung sind in den Patentansprüchen 9 bis 12 wiedergegeben.

Bevorzugte Ausführungsformen der Erfindung sind der folgenden Be schreibung, den Patentansprüchen und der Zeichnung zu entnehmen.

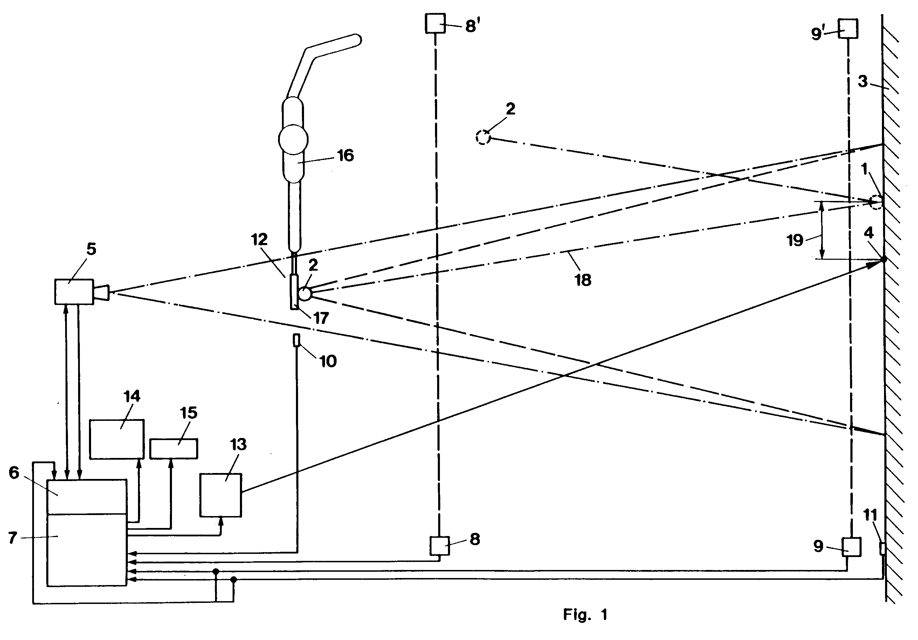

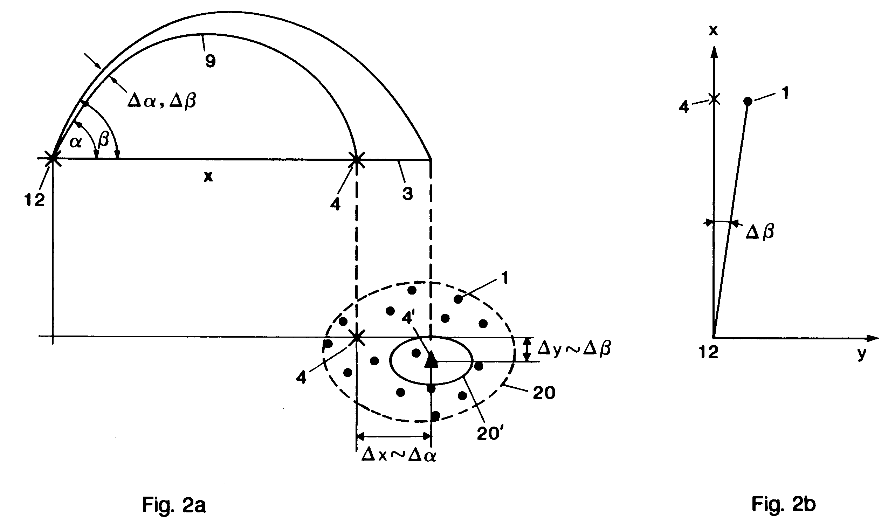

Im folgenden wird die Erfindung anhand der Zeichnung näher erläutert. Es zeigen Fig.1 schematisch den Aufbau einer erfindungsgemäßen Trainingseinrichtung und die Fig.2 bis 4 schematische Darstellungen für das erfindungsgemäße Auswerteverfahren.

In Fig.1 ist schematisch eine erfindungsgemäße Meßanordnung bzw. Trainingseinrichtung dargestellt. Im vorliegenden Fall wird die Erfindung anhand eines Tennisspielers näher erläutert; es ist jedoch verständlich, daß die Erfindung für alle Ballspiele, z.B. Tennis, Fußball, Tischtennis, Handball, Golf, Eishockey sowie für Wurfspiele, bei denen es darauf ankommt, ein Ziel zu treffen, z.B. Wurfpfeilschießen, Bogenschießen usw., anwendbar ist. Bei allen diesen Sportarten kommt es darauf an, die optimale Lerngeschwindigkeit zu eruieren, da bei dieser die Fortschritte bezüglich Genauigkeit und Schnelligkeit des Schusses und Wurfes am besten ist.

Ein Tennisspieler 16 befindet sich gemäß Fig.1 an einem Abspielort 12 und versucht mit seinem Schläger 17 einen Ball 2 möglichst nahe an einen Zielpunkt 4 an einer Trefferwand 3 zu spielen. Im vorliegenden Fall ist die Bahn 18 des Balles 2 dargestellt, derart, daß der Ball 2 den Zielpunkt 4 verfehlt und einen Ballauftreffpunkt 1 im Abstand vom Zielpunkt 4 besitzt.

Der Auftreffpunkt des Balles 2 auf der Zielwand 3 wird mittels einer elektronischen Kamera 5 (z.B. Videokamera) detektiert, welche den Zielpunkt 4 als auch den Ballauftreffpunkt 1 überwacht und das gewonnene Bild einer Bildverarbeitungseinrichtung 6 übermittelt. Mittels eines Rechners 7, den auch Signale bezüglich der Geschwindigkeit des Balles 2, des Abstandes zwischen dem Abschlagort 12 und der Zielwand 3 und auch allenfalls weitere Meßwerte, gegebenenfalls Windgeschwindigkeit, Luftwiderstand des Balles usw., zugeführt sind, wird der Abstand 19 der Auftreffpunkte 1 vom Zielpunkt 4 berechnet, gespeichert und ausgewertet. Nach entsprechender Auswertung werden die Ergebnisse auf einem Bildschirm 14 und/oder einem Drucker 15 angezeigt und stehen dem Trainierenden zur Verfügung.

Die Geschwindigkeit des Balles kann auf verschiedene Arten gemessen werden. Im vorliegenden Fall ist dazu ein Lichtvorhang gebildet von Lichtgebern und -sensoren 8,8' bzw.9,9' vorhanden.

Zusätzlich oder alternativ können Mikrophone 10 und 11 vorgesehen sein, die aufgrund des Schlaggeräusches bzw. Auftreffgeräusche die Bestimmung der Flugzeit und somit der Geschwindigkeit des Balles gestatten. Als Meßeinrichtungen für die Geschwindigkeitsmessung des Balles 2 können auch Infrarot- oder andere elektromagnetische Meßeinrichtungen vorgesehen sein.

Sinnvoll ist es, wenn dem Rechner der Zeitpunkt des Auftreffgeräusches des Balles 2 auf der Zielwand 3 zugeführt wird, da damit eine Triggerung der Bildauswertung durchgeführt werden kann und der genaue Zeitpunkt des Auftreffens des Balles 2 auf der Zielwand 3 ermittelt und für die Bildauswertung herangezogen werden kann. Das Auftreffen des Balles 2 auf der Zielwand 3 kann auch mittels Erschütterungssensoren od.dgl. festgestellt werden. Sinnvoll ist es, wenn die Wand und der Ball gegenseitig kontrastreich sind, z.B. eine dunkle Wand und ein weißer Ball gewählt werden.

Eine Ausführungsform der Erfindung sieht ein Zielgerät 13 vor, das optisch einen Zielpunkt 4 auf der Zielwand 3 abbildet, wobei dieser Zielpunkt gegebenenfalls von Schlag zu Schlag oder von einem Durchgang von Schlägen zu einem weiteren Durchgang variiert werden kann.

Als Aufnahmegeräte können Videokameras, Photokameras, Camcorders oder ähnliche Bildaufzeichengeräte verwendet werden, die vorzugsweise triggerbar und bildspeicherfähig sind und ein ausreichend großes Bildfeld aufweisen. Vorteilhafterweise wird ein Aufnahmegerät direkt in der Linie Bildpunkt 4 - Abspielort 12 aufgestellt.

Die Zielwand 3 kann senkrecht stehen, waagrecht angeordnet sein, oder auch in beliebigen Winkelpositionen angeordnet werden. Die Neigung der Zielwand hängt insbesondere von der Art des Ballspiels und den zu trainierenden Bewegungen ab. Beim Tennisspiel kann die Trefferwand senkrecht oder horizontal angeordnet sein; beim Wurfpfeilspiel wird die Trefferwand senkrecht angeordnet sein.

Zu bemerken ist ferner, daß der Abstand 19 zwischen dem Zielpunkt 4 und dem Auftreffpunkt 1 sowohl eine vertikale Komponente bzw.in Flugrichtung liegende und eine horizontale bzw. quer zur Flugrichtung liegende Komponente besitzt, je nachdem, ob die Trefferwand senkrecht bzw. geneigt oder horizontal angeordnet ist.

Ferner ist zu bemerken, daß eine seitliche Abweichung, z.B. beim Tennisspielen, davon abhängt, ob der Tennisspieler den Ball zu früh oder zu spät trifft bzw. eine vertikale Abweichung bzw. eine Abweichung in Flugrichtung von der Winkelstellung des Schlägers abhängt.

Jeder geworfene bzw. geschossene Körper legt eine Wurfparabel zurück, deren physikalische Gleichung lautet:

$$X = (V^2 \sin 2\alpha)/g,$$

wobei V die Fluggeschwindigkeit, X der Abstand zwischen Abwurfort und Auftreffpunkt (Wurfweite), $\alpha$ der Abwurf bzw. Abschußwinkel und g die Erdbeschleunigung sind. Diese klassische Wurfparabel erfährt durch externe Einflüsse, z.B. Luftwiderstand, Windbewegungen usw., Korrekturen, welche z.B. durch entsprechende Auswertung im Rechner eingebracht oder auch vernachlässigt werden können. Die Abstände auf der Zielwand zwischen Zielpunkt und Auftreffpunkt beruhen auf Fehlstellungen des Schlägers in Bezug zur Zielwand. Eine Direktmessung einer Fehlstellung des Schlägers des Spielers wäre zwar mit Hochgeschwindigkeitskameras zum Zeitpunkt des Abspielens möglich, jedoch sehr schwierig durchzuführen und nicht leicht mit der Lage des Auftreffpunktes der Zielwand zu koordinieren. Erfindungsgemäß wird nunmehr derart vorgegangen, daß aus den Abweichungen an der Zielwand auf die Fehler bezüglich der Winkel ($\Delta\alpha$ und/oder $\Delta\beta$, siehe Fig.2) beim Abspielpunkt rückgeschlossen wird. Es wird also eine leicht meßbare Größe an der Zielwand verwendet, um den relativ kleinen Winkelfehler beim Abspielen festzustellen. Dazu werden, wie später beschrieben, verschiedene Auswerteverfahren eingesetzt.

Da sich erwiesen hat, daß der Winkelfehler beim Abspielen, insbesondere der wichtige Winkelfehler betreffend die Abweichung in Flugrichtung, sich für verschiedene Abspielgeschwindigkeiten ändert, hat der Trainierende eine Anzahl von Durchgängen mit verschiedenen Geschwindigkeiten V zu spielen, um so die Möglichkeit zu bieten, seine Winkelgenauigkeit beim Abspielen für die verschiedenen Geschwindigkeiten festzustellen bzw. zu berechnen. Man erhält vom Rechner Angaben, bei welcher Spielgeschwindigkeit` d.h. Abschuß bzw. Abfluggeschwindigkeit des Balles, die Genauigkeit abzunehmen beginnt bzw. die Abweichungen anzusteigen beginnen, wobei jedoch diese statistisch gewerteten Abweichungen auf den Abspielort bzw. auf eine Veränderung des Abspielwinkels rückgerechnet werden. Sodann wird diejenige Geschwindigkeit ermittelt bzw. errechnet und zur Anzeige gebracht, bei der diese Abweichungen am kleinsten, oder mit anderen Worten, die Spielgenauigkeit am größten ist.

Erfindungsgemäß kann nun eine Auswertung gemäß Fig.2 in einem statistischen Verfahren folgendermaßen erfolgen:

In Fig.2 ist eine Wurfparabel 9 eingezeichnet, gemäß der ein im Abspielpunkt 12 mit einem Winkel $\alpha$ abgeschossener Gegenstand den Zielpunkt 4 auf einer horizontalen Zielfläche trifft. In der Praxis ergibt sich jedoch eine Anzahl von vom Zielpunkt 4 entfernt liegenden Treffpunkten 1, aus denen ein statistisch gemittelter Auftreffpunkt 4' ermittelt wird. Dieser mittlere Auftreffpunkt weicht um eine quer zur Flugrichtung liegende Komponente $\Delta y$ und um eine in Flugrichtung liegende Komponente $\Delta x$ vom vorgegebenen Zielpunkt 4 ab. Ferner wird nach statistischen Methoden eine gewichtete Fläche 20 ermittelt, deren Mittelpunkt der Punkt 4' ist. Ausgehend von diesem Punkt 4' wird nunmehr auf Abwurffehler bzw. Winkelfehler $\Delta\alpha$ und/oder $\Delta\beta$ beim Abspielort 12 rückgerechnet. Dies kann unter Zuhilfenahme der Wurfparabelgleichung iterativ erfolgen. Mit einem angenommenen Wert $\Delta x$ und/oder $\Delta y$ für eine Winkelabweichung von einer zum Punkt 4' führenden Wurfparabel wird nun der Punkt 4' als statistischer Flächenmittelpunkt einer Ausgangsfläche 20' berechnet und mit der statistisch ermittelten Trefferfläche 20 verglichen. Ist dieser Vergleich unterhalb einer gewissen Genauigkeit geblieben, so werden die Parameter $\Delta x$ und/oder $\Delta y$ abgeändert und es wird eine neue Ausgangsfläche 20' errechnet, die mit der gemittelten Fläche 20 besser übereinstimmen sollte. Wenn in der Übereinstimmung eine gewissene Genauigkeit erreicht worden ist, werden aus der so gewonnenen Ausgangsfläche die Abweichungen $\Delta y$ bzw. $\Delta x$ mit Hilfe der Entfernung X und der Anfangsgeschwindigkeit V auf den Abspielort 12 rückgerechnet und so die dort auftretenden Winkelfehler $\Delta\alpha$ und/oder $\Delta\beta$ errechnet und angezeigt. Anstelle der Entfernung X kann auch die Länge der Flugparabel zur Berechnung herangezogen werden.

Trägt man nunmehr diese für eine Anzahl von verschiedenen Sollgeschwindigkeiten V ermittelten Werte $\Delta\alpha$ bzw. $\Delta\beta$ in ein Diagramm ein, so erkennt man, daß bei zunehmender Spielgeschwindigkeit sich die Werte von $\Delta\alpha$ verändern.

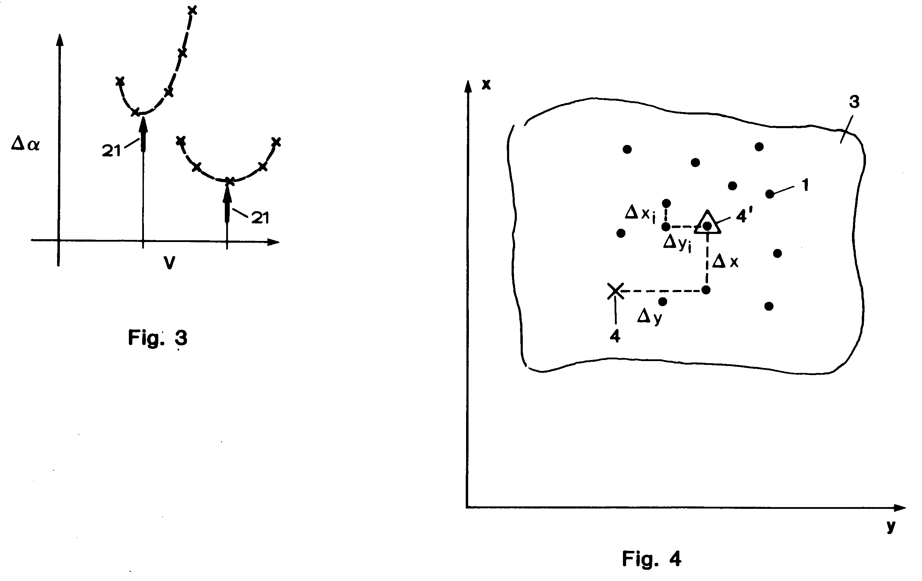

Fig.3 zeigt als untere Kurve beispielsweise die Werte von $\Delta\alpha$ für einen guten Spieler, wobei festzustellen ist, daß diese Werte $\Delta\alpha$ mit zunehmender Spielgeschwindigkeit abnehmen und dann anzusteigen beginnen. Bei Pfeil 21 liegt die optimale Trainingsgeschwindigkeit V. Die in Fig.3 obenliegende Kurve ist die Kurve für einen wenig geübten Spieler; bei diesem Spieler liegt die optimale Trainingsgeschwindigkeit zu geringeren Werten verschoben; man erkennt, daß auch hier bei sehr geringer Geschwindigkeit die Winkelabweichung für einen gewissen Geschwindigkeitsbereich abnimmt und erst dann wieder anzusteigen beginnt; der optimale Trainingsbereich ist mit dem Pfeil 21' gekennzeichnet.

Fig.4 zeigt eine weitere Möglichkeit der statistischen Ermittlung der Winkelfehler am Abspielort. Auf einer Zielfläche 3 ist eine Anzahl von Auftreffpunkten 1 eingezeichnet, die vom Zielpunkt 4 abweichen. Mittels der Bilderkennungseinrichtung werden die Koordinaten dieser Punkte 1 erfaßt und ausgewertet. Im weiteren Verlauf des Auswerteverfahrens wird ein mittlerer Auftreffpunkt 4' z.B. durch arithmetische Mittelung sämtlicher Koordinaten ermittelt. Dieser mittlere Auftreffpunkt 4' weicht um die Koordinaten $\Delta y$ und $\Delta x$ vom Zielpunkt 4 ab. Als nächster Schritt werden für sämtliche Auftreffpunkte 1 die Abweichungen $\Delta xi$ und $\Delta yi$ vom mittleren Auftreffpunkt 4' ermittelt und sodann über die einzelnen Auftreffpunkte gemittelt. Man erhält daraufhin gemittelte Werte für $\Delta xi$ und $\Delta yi$; rechnet man diese gemittelten Abweichungen unter Zuhilfenahme der Wurfparabel auf den Abspielort 12 zurück, so erhält man Winkelabweichungen $\Delta\alpha$ und/oder $\Delta\beta$ bezüglich des Abspielwinkels, und zwar in und/oder quer zur Flugrichtung. Diese Winkelabweichungen können wieder über die Sollgeschwindigkeiten aufgetragen werden und ergeben Kurven entsprechend Fig.3.

Es ist verständlich, daß die Messungen genauer werden, wenn die Anzahl der Durchgänge mit vorgegebenen Spielgeschwindigkeiten erhöht wird bzw. die Wurf- bzw. Schußendzahl pro Durchgang erhöht wird bzw. die Geschwindigkeiten für die einzelnen Durchgänge nicht zu weit auseinanderliegen.

**Patentansprüche**

1. Verfahren zur Bestimmung der optimalen Wurf-, Schuß- bzw. Abspieltrainingsgeschwindigkeit bei Wurfsportarten bzw. Ballspielen, wie z.B. Tennis, Tischtennis, Fußball, Handball, sowie auch gegebenenfalls Eishockey od.dgl., bei dem ein Sportgegenstand (2), z.B. ein Ball, möglichst nahe an einen vorbestimmten Zielpunkt (4) geworfen, geschossen, abgeschlagen, gespielt od. dgl. in Bewegung gesetzt werden soll, dadurch gekennzeichnet, daß für eine einen Meßdurchgang bildende bestimmte Anzahl von Würfen, Schüssen, Abspielen od.dgl., dem Trainierenden (16) ein Sollwert für die Trainingsgeschwindigkeit vorgegeben wird, daß dieser Sollwert für aufeinanderfolgende Durchgänge jeweils neu festgesetzt wird, insbesondere eine Reihe von Durchgängen mit steigenden Sollwerten der Trainingsgeschwindigkeit abgewickelt wird, daß für jeden Durchgang in der Zielebene (3) die Abstände (19) der Auftreffpunkte (1) des Sportgegenstandes (2) vom Zielpunkt (4) vermessen bzw. errechnet und, insbesondere statistisch, verknüpft bzw. ausgewertet, z.B. gemittelt, werden, daß aus den Abständen (19) der Auftreffpunkte (1) vom Zielpunkt (4) und der Entfernung (X) zwischen dem Abwurf- bzw. Abspielort (12) des Sportgegenstandes (2) und dem Zielpunkt (4) der Winkelfehler ($\Delta\alpha$, $\Delta\beta$) zwischen der Tangente an der zum Zielpunkt (4) führenden Flugbahn und der (den) Tangente(n) der zu den Auftreffpunkten (1) bzw. zu dem sich bei Mittelung der Abstände (19) vom Zielpunkt ergebenden Punkt (4') führenden Flugbahn(en) beim Ort (12) des Abwurfes, Abschusses bzw. Abspielens errechnet wird und daß als optimale Trainingsgeschwindigkeit aus den Sollwerten der Trainingsgeschwindigkeiten die Geschwindigkeit ausgewählt bzw. bestimmt wird, z.B. auch durch Interpolation bestimmt wird, bei welcher dieser Winkelfehler ($\Delta\alpha$, $\Delta\beta$) am kleinsten ist.

2. Verfahren nach Anspruch 1, dadurch gekennzeichnet, daß aus den tatsächlichen gemessenen Geschwindigkeiten der einzelnen Würfe bzw. Schüsse eines Durchganges, z.B. durch arithmetische Mittlung, eine mittlere Wurf- bzw. Schußgeschwindigkeit für den Durchgang errechnet wird, die der Auswertung der Würfe bzw. Schüsse zugrundegelegt wird.

3. Verfahren nach Anspruch 1 oder 2, dadurch gekennzeichnet, daß aus der Lage der Auftreffpunkte (1) des Gegenstandes (2) in der Zielebene (3) in Bezug auf den Zielpunkt (4) statistisch, z.B. nach dem Prinzip der Exklusion von Extremwerten oder nach dem Prinzip der Poissonverteilung der der Kontrollflächendichte od.dgl., eine mittlere Auftrefffläche berechnet wird, daß aus der Entfernung (X) zwischen dem Abspielort (12) und dem Zielpunkt (4) und der mittleren Wurf- bzw. Schußgeschwindigkeit (V) ein mittlerer Abspielwinkel $\alpha$, gemessen zwischen der Tangente an der Flugrichtung und der Horizontalen am Abspielort (12), entsprechend der gegebenenfalls bezüglich Luftwiderstand, Balleffet od.dgl. korrigierten physikalischen Wurfparabelgleichung ($X = V^2/g \cdot \sin 2\alpha$) errechnet wird, daß ausgehend von dem Durchstoßpunkt der auf diese Weise berechneten Wurfparabel mit der Zielebene (3) unter Variation eines in der Flugrichtung gelegenen Winkelfehlers ($\Delta\alpha$) und/oder eines quer zur Flugrichtung gelegenen Winkelfehlers ($\Delta\beta$) ein Ausgangsflächenbereich berechnet und mit der mittleren Auftrefffläche verglichen wird, daß in Abhängigkeit des Vergleichs der Winkelfehler ($\Delta\alpha$) und/oder ($\Delta\beta$) variiert und in iterativen Schritten der Ausgangsflächenbereich der mittleren Auftrefffläche bis zu einer vorgegebenen Genauigkeit angenähert wird, und daß aus dem Endwert des Ausgangsflächenbereiches unter Zuhilfenahme der erwähnten Wurfparabelgleichung die Endwerte für ($\Delta\alpha$) und/oder ($\Delta\beta$) als Winkelfehler des Abspielwinkels in Abhängigkeit von der mittleren Wurf- bzw. Schußgeschwindigkeit (V) für eine Anzahl von mit verschiedenen Sollwerten der Trainingsgeschwindigkeit gespielten Durchgängen errechnet und gegebenenfalls optisch angezeigt werden und daß als optimale Trainingsgeschwindigkeit die mittlere Wurf- bzw. Schußgeschwindigkeit angezeigt bzw. gewählt wird, bei welcher der Winkelfehler ($\Delta\alpha$) und/oder ($\Delta\beta$) am kleinsten ist.

4. Verfahren nach einem der Ansprüche 1 bis 3, dadurch gekennzeichnet, daß zur Berechnung der Zielgenauigkeit (Akkuranz) (scheinbaren Bewegungsgenauigkeit), insbesondere für jeden Durchgang, die Abstände (19) zwischen den Auftreffpunkten (1) und dem Zielpunkt (4), vorzugsweise die Abstände in der Flugrichtung und/oder quer dazu, gemessen bzw. berechnet und, insbesondere nach statistischen Methoden oder durch Bildung ihres arithmetischen Mittels, gemittelt werden und die gemittelten Abstandswerte als mittlerer Treffpunkt (4') bzw. mittlere Abweichung in der Flugrichtung und/oder quer dazu, angezeigt werden.

5. Verfahren nach einem der Ansprüche 1 bis 4, dadurch gekennzeichnet, daß zur Berechnung der Treffgenauigkeit (tatsächliche Bewegungsgenauigkeit), d.h. des Winkelfehlers beim Ort (12) des Abwurfs bzw. Abschusses, insbesondere für jeden der mit verschiedenen Sollwerten für die Trainingsgeschwindigkeit (V) absolvierten Durchgänge, die Abstände (19) der Auftreffpunkte (1) vom Zielpunkt (4) statistisch gemittelt bzw. gewichtet werden, daß ein mittlerer Treffpunkt (4) bzw. ein mittlerer Abstand in der und/oder quer zur Flugrichtung des Gegenstandes (2) bestimmt wird, daß die Abweichung der einzelnen Treffpunkte (1), insbesondere die mittlere Abweichung der Treffpunkte, in der und/oder quer zur Flugrichtung vom mittleren Treffpunkt (4') bzw. vom mittleren Abstand bestimmt bzw. berechnet wird, daß die mittlere Abweichung in der und/oder quer zur Flugrichtung als Winkelfehler ($\Delta\alpha$) und/oder ($\Delta\beta$) des Abwurf- bzw. Abspielwinkels am Ort (12) des Abwurfes bzw. Abschusses ins Verhältnis zur optimalen Trainingsgeschwindigkeit gesetzt und gegebenenfalls optisch angezeigt wird und daß als optimale Trainingsgeschwindigkeit die mittlere Wurf- bzw. Schußgeschwindigkeit angezeigt bzw. gewählt wird, bei welcher der Winkelfehler ($\Delta\alpha$) und/oder ($\Delta\beta$) am geringsten ist.

6. Verfahren nach einem der Ansprüche 1 bis 5, dadurch gekennzeichnet, daß zur Berechnung der Winkelfehler ($\Delta\alpha$) und/oder ($\Delta\beta$) die mittlere Abweichung in der und/oder quer zur Flugrichtung in der Zielebene (3) ins Verhältnis zur Flugparabellänge bzw. zur Entfernung (X) zwischen dem Abspiel- bzw. Abwurfort (12) und dem Zielpunkt (4) gesetzt wird.

7. Trainingsvorrichtung für Wurfsportarten bzw. Ballspiele, z.B. Tennis, Tischtennis, Handball od.dgl., die eine Meßeinrichtung für die Fluggeschwindigkeit eines in Richtung auf einen Zielpunkt (4) geworfenen, geschossenen, abgeschlagenen, gespielten od.dgl. in Bewegung gesetzten Gegenstandes (2), vorzugsweise eines Balles, vorzugsweise einen Lichtvorhang (8,8';9,9') oder akustische Meßeinrichtungen, z.B. auf das Abschuß- und Aufprallgeräusch ansprechende Mikrophone (10,11), eine Einrichtung (5) zur Erkennung des Auftreffpunktes (1) des Gegenstandes (2) auf der Zielebene (3), z.B. einer Prallwand, und zur Feststellung der Lage bzw. des Abstandes (19) des jeweiligen Auftreffpunktes (1) von dem vorgegebenen Zielpunkt (4) und eine Auswertungseinheit (7), z.B. einen Rechner, zur Berechnung der jeweiligen Abstände (19) zwischen dem Zielpunkt (4) und dem Auftreffpunkt (1) des Gegenstandes (2) umfaßt, der die Meßwerte der Meßeinrichtung für die Fluggeschwindigkeit zuführbar sind, zur Durchführung des Verfahrens nach einem der Ansprüche 1 bis 6, dadurch gekennzeichnet, daß als Erkennungseinrichtung eine Bildaufnahme- und Bildverarbeitungseinrichtung (5,6), z.B. mit einer elektronischen Kamera, vorgesehen ist, und daß an die Auswertungseinheit (7) eine optische Anzeigeeinheit, z.B. ein Bildschirm (14) bzw. eine Aufzeichnungseinheit (15), z.B. ein Schreiber, für die aus der Entfernung (X) zwischen dem Ort (12) des Abwurfes bzw. Abschusses und dem Zielpunkt (4) (Flugparabelentfernung) und den statistisch gemittelten Abständen (19) der Auftreffpunkte (1) des Gegenstandes (2) vom Zielpunkt (4) berechneten Winkelfehler ($\Delta\alpha$) und/oder ($\Delta\beta$), zwischen der zum Zielpunkt (4) und zum jeweiligen Auftreffpunkt (1) oder zu einem durch Mittelung der Abstände (19) der Auftreffpunkte (1) vom Zielpunkt (4) erhaltenen Punkt führenden Flugrichtung am Ort (12) des Abwurfes bzw. Abspiels, angeschlossen ist.

8. Vorrichtung nach Anspruch 7, dadurch gekennzeichnet, daß die elektronische Kamera (5) in Bezug auf die Zielebene (3), z.B. Prallwand, hinter dem Abwurf- bzw. Abspielort (12) angeordnet ist und den vorgesehenen Schuß- bzw. Wurfbereich sowie den Zielpunkt (4) überdeckt.

9. Vorrichtung nach Anspruch 7 oder 8, dadurch gekennzeichnet, daß der Zielpunkt (4) wie an sich bekannt auf der Zielebene (3) lagemäßig verstellbar ist, wozu gegebenenfalls ein einen optischen Zielstrahl auf die Zielebene (3) projizierendes Zielgerät (13) vorgesehen ist.

10. Vorrichtung nach Anspruch 9, dadurch gekennzeichnet, daß zur Veränderung der Lage des Zielpunktes (4) das Zielgerät (13) mit einem den Zielstrahl ablenkenden bzw. den Zielpunkt (4) vorgebenden Zufallsgenerator verbunden ist.

11. Vorrichtung nach einem der Ansprüche 7 bis 10, dadurch gekennzeichnet, daß die Bildaufnahme- und Bildbearbeitungseinrichtung (5,6) von einer Einrichtung zur optischen oder akustischen Bestimmung des Aufpralls des Gegenstandes (2) auf der Zielebene (3) getriggert ist.

12. Vorrichtung nach einem der Ansprüche 7 bis 11, dadurch gekennzeichnet, daß in der Auswertungseinheit (7) Speicher für die Lage bzw. die Koordinaten der Auftreffpunkte (1), für den bzw. die Zielpunkte (4), für die gemessenen Fluggeschwindigkeiten, die Entfernung (X) vom Ort (12) des Abwurfes bzw. Abschusses zum Zielpunkt (4) usw., vorgesehen sind.

## Claims

1. A process for determining the optimum training speed for throwing, shooting or passing in throwing sports or ball games such as e.g. tennis, ping-pong, football, handball and optionally ice hockey or the like, in which a sports object (2), such as a ball, is thrown, shot, passed or the like into motion as closely as possible to a predetermined point of aim (4), characterized in that a set value for training speed is predetermined for the trainee (16) for a given number of throws, shots, passes or the like constituting a measuring operation, that this set value is newly set for each consecutive operation, in particular a sequence of operations with increasing set values of training speed is performed, that the distances (19) of the impact points (1) of the sports object (2) from the point of aim (4) in the target plane (3) are measured or calculated and in particular statistically chained or evaluated, for instance taken the mean of, that the angle error ($\Delta\alpha$, $\Delta\beta$) between the tangent on the trajectory leading to the point of aim (4) and the tangent(s) of the trajectory (trajectories) leading to the impact points (1) or to point (4') resulting from taking the mean of the distances (19) from the point of aim at site (12) of the throw, shot or pass is calculated from the distances (19) of the impact points (1) from the point of aim (4) and the distance (X) between the throwing or passing site (12) of the sports object (2) and the point of aim (4), and that the optimum training speed selected or determined from the set values of training speeds, for instance also determined by interpolation, is that in which this angle error ($\Delta\alpha$, $\Delta\beta$) is smallest.

2. The process according to claim 1, wherein a mean throwing or shooting speed for the operation is calculated from the actually measured speeds of the individual throws or shots of an operation, for instance by taking the arithmetic mean, and then used as a basis for the evaluation of the throws or shots.

3. The process according to claim 1 or 2, wherein a mean impact surface is calculated statistically, from the position of the impact points (1) of the object (2) in the target plane (3) in relation to the point of aim (4), for instance according to the principle of the exclusion of extreme values or the principle of Poissons's distribution, the control surface density or the like, a mean passing angle $\alpha$ is calculated from the distance (X) between the passing site (12) and the point of aim (4) and the mean throwing or shooting speed (V) measured between the tangent on the line of projection and the horizontal at the passing site (12), according to the physical parabolic projection equation ($X = V^2/g \cdot \sin 2\alpha$) optionally corrected in respect of air resistance (drag), ball effect or the like, starting from the piercing point of the parabola of projection with target plane (3) calculated in this manner, a starting surface area is calculated and compared to the mean impact surface with variation of an angle error ($\Delta\alpha$) situated in the line of projection and/or an angle error ($\Delta\beta$) positioned transverse to the line of projection, as a function of the comparison, the angle error ($\Delta\alpha$) and/ or ($\Delta\beta$) is varied and the starting surface area is approximated to the mean impact surface in iterative steps up to a predetermined accuracy and the final values for ($\Delta\alpha$) or ($\Delta\beta$) as angle errors of the passing angle as a function of the mean throwing or shooting speed (V) are calculated, and optionally optically displayed, from the final value of the starting surface area with use of the abovementioned parabolic projection equation for a number of operations carried out with different set values of training speed and the optimum traning speed displayed or selected is the mean throwing or shooting speed in which the angle error ($\Delta\alpha$) and/or ($\Delta\beta$) is

smallest.

4. The process according to any one of the claims 1 to 3, wherein for calculating the accuracy of aim (accurance) (apparent accuracy of motion), in particular for each operation, the distances (19) between the impact points (1) and the point of aim (4), preferably the distances in the line of projection and/or transverse thereto, are calculated or measured and, in particular according to statistical methods or by taking their arithmetic mean, are taken mean of and the mean distance values are displayed as mean target point (4') or mean deviation in the line of projection or transverse thereto.

5. The process according to any one of the claims 1 to 4, wherein for calculating the accuracy of aim ((actual accuracy of motion), i.e. the angle error at site (12) of the throw or shot, in particular for each one of the operations performed with different set values for training speed (V), the distances (19) of the impact points (1) from the point of aim (4) are statistically taken mean of or weighted, a mean target point (4') or a mean distance in the line of projection or transverse thereto of the object (2) is determined, the deviation of the individual impact points (1), in particular the mean deviation of the impact points, in the and/or tranverse to the line of projection from the mean target point (4') or the mean distance is determined or calculated, the mean deviation in the and/or transverse to the line of projection is taken as angle error ($\Delta\alpha$) and/or ($\Delta\beta$) of the throwing or passing angle at site (12) of the throw or shot in relation to the optimum training speed and optionally optically displayed and the optimum training speed displayed or selected is the mean throwing or shooting speed in which the angle error ($\Delta\alpha$) and/or ($\Delta\beta$) is smallest.

6. The process according to any one of the claims 1 to 5, wherein for calculating the angle errors ($\Delta\alpha$) and/or ($\Delta\beta$), the mean deviation in the line of projection or transverse thereto in the target plane (3) is related to the length of the parabola of projection or to the distance (X) between the passing or throwing site (12) and the point of aim (4).

7. A training device for throwing sports or ball games, for instance tennis, ping-pong, handball or the like, having a measuring means for the projection speed of an object (2), preferably a ball, set in motion by throwing, shooting, pitching, passing or the like in the direction of a point of aim (4), a light curtain (8, 8'; 9, 9') or acoustic measuring means, for instance microphones (10, 11) responding to the shooting and impacting sound, a means (5) for recognizing the impact point (1) of the object (2) on the target plane (3), for instance a rebounding wall,and for determining the position or distance (19) of the respective impact point (1) from the predetermined point of aim (4) and an evaluating unit (7), for instance a computer, for calculating the respective distances (19) between the point of aim (4) and the impact point (1) of the object (2) in which the measuring values of the measuring means for the projecting speed are input, for carrying out the process according to any one of the claims 1 to 6, characterized in that the recognition means used is an image recording and image processing means (5, 6), for instance with an electronic camera, and that connected to the evaluating unit (7) is an optical display unit, for instance a screen (14) or a recording unit (15), for instance a recorder, for the angle errors ($\Delta\alpha$) and/or ($\Delta\beta$) calculated from the distance (X) between the site (12) of the throw or shot and the point of aim (4) (parabolic line of projection distance) and the distances (19) statistically taken the mean of of the impact points (1) of object (2) from the point of aim (4),between the line of projection at the site (12) of throw or pass leading to the point of aim (4) and the respective impact point (1) or to a point obtained by taking the mean of the distances (19) of the impact points (1) from the point of aim (4).

8. The device according to claim 7, wherein the electronic camera (5) is disposed behind the target plane (3), for instance rebounding surface, behind the throwing or passing site (12) and sweeps the intended shooting or throwing area as well as the point of aim (4).

9. The device according to claim 7 or 8, wherein the point of aim (4) is adjustable in regard to position, as known per se, in the target plane (3), a target means (13) projecting an optical target beam onto the target plane (3) optionally being provided for this purpose.

10. The device according to claim 9, wherein the target means (13) is connected to a random generator deflecting the target beam or predetermining the point of aim (4) for changing the point of aim (4).

**11.** The device according to any one of the claims 1 to 10, wherein the image recording and image processing means (5,6) is triggered by a means for the optical or acoustical determination of the impact of the object (2) on the target plane (3).

**12.** The device according to any one of the claims 7 to 11, wherein memories for the position or the coordinates of the impact points (1), for the point(s) of aim (4), the projection velocities measured, the distance (X) from site (12) of the throw or shot to the point of aim (4) and the like are provided in the evaluation unit (7).

**Revendications**

**1.** Procédé en vue de déterminer la vitesse optimale d'un lancer, d'un tir ou d'une passe, à l'entraînement dans les sports de lancer ou les jeux de balle ou de ballon tels que tennis, ping-pong, football, handball, ainsi que le cas échéant hockey sur glace ou autre sport analogue, dans lesquels l'objet d'exercice du sport (2), p.ex. une balle, doit être lancé, tiré, renvoyé, joué ou mis de quelque façon en mouvement, pour aboutir aussi près que possible d'un point-cible (4) fixé à l'avance, caractérisé en ce qu'une valeur de consigne pour la vitesse d'entraînement est donnée au sujet qui s'entraîne (16) pour un nombre déterminé de lancers, tirs, passes ou autres constituant un cycle de mesure, que cette consigne est mise à une autre valeur pour chacun des cycles successifs, en particulier qu'une série de cycles est exécutée avec des valeurs de consignes augmentant progressivement la vitesse d'entraînement, que pour chaque cycle la distance (19) des points d'impact (1) de l'objet (2) au point-cible (4) sur le plan de cible (3) est mesurée ou calculée et liée ou évaluée, p.ex. pour faire la moyenne, que l'erreur angulaire ($\Delta\alpha$, $\Delta\beta$) entre la tangente à la trajectoire aboutissant au point-cible (4) et la (les) tangente(s) à la (aux) trajectoire(s) aboutissant aux points d'impact (1) ou au point (4') résultant de la moyenne des distances (19) des points d'impact au point-cible, est calculée à partir de la distance (19) des points d'impact (1) au point-cible (4) et de la distance (X) du point de lancer, de tir ou de passe (12) de l'objet (2) au point-cible (4) et que l'on choisit ou détermine, par exemple par interpolation, comme vitesse d'entraînement optimale la vitesse pour laquelle cette erreur angulaire ($\Delta\alpha$, $\Delta\beta$) est la plus petite.

**2.** Procédé selon la revendication 1, caractérisé en ce qu'une vitesse de lancer ou de tir moyenne est calculée pour un cycle à partir des vitesses des différents lancers ou tirs d'un cycle effectivement mesurées, p. ex. en faisant la moyenne arithmétique, et qu'elle est utilisée pour l'appréciation des lancers ou des tirs.

**3.** Procédé selon la revendication 1 ou 2, caractérisé en ce qu'une surface d'impact moyenne est calculée statistiquement, p.ex. selon le principe de l'exclusion de valeurs extrêmes ou selon le principe de la répartition de Poisson, à partir de la situation des points d'impact (1) de l'objet (2) sur le plan de cible (3) par rapport au point-cible (4), que la moyenne des angles $\alpha$ mesurés entre la tangente à la trajectoire et l'horizontale au point d'envoi (12) est calculée à partir de la distance (X) du point d'envoi (12) au point-cible (4) et de la vitesse de lancer ou de tir moyenne (V) à l'aide de l'équation de la parabole de la trajectoire physique ($X = V^2/g.\sin 2\alpha$), corrigée le cas échéant en tenant compte de la résistance de l'air, de l'effet de balle ou autres paramètres, qu'une surface initiale est calculée à partir du point de percée de la parabole de la trajectoire ainsi calculée sur le plan de cible (3), compte tenu d'une variation de l'erreur angulaire ($\Delta\alpha$) dans le sens de la trajectoire et/ou de l'erreur angulaire ($\Delta\beta$) transversale au sens de la trajectoire, et comparée à la surface d'impact moyenne, que l'erreur angulaire ($\Delta\alpha$) ou ($\Delta\beta$) est variée en fonction de la comparaison et que la surface initiale est rapprochée par itérations de la surface d'impact moyenne jusqu'à obtention d'une exactitude donnée et que les valeurs finales de ($\Delta\alpha$) et ($\Delta\beta$) sort calculées pour un nombre de cycles effectués selon des valeurs de consigne différentes concernant la vitesse d'entraînement, à partir de la valeur finale de la surface initiale en utilisant l'équation de la parabole de la trajectoire indiquée plus haut et prises comme erreurs angulaires de l'angle d'envoi, compte tenu de la vitesse moyenne de lancer ou de tir (V), et le cas échéant visualisées et que la vitesse de lancer ou de tir moyenne pour laquelle l'erreur angulaire ($\Delta\alpha$) et/ou ($\Delta\beta$) est la plus petite est visualisée ou choisie en tant que vitesse d'entraînement optimale.

**4.** Procédé selon une des revendications 1 à 3, caractérisé en ce que pour le calcul de la précision de lancer ou de tir (précision de mouvement apparente), les distances (19) entre les points d'impact (1) et le point-cible (4), avantageusement dans le sens de la trajectoire et/ou transversalement à la trajectoire, sont mesurées ou calculées, en particulier pour chaque cycle et que la moyenne est calculée en particulier à l'aide de méthodes statistiques ou en faisant la moyenne arithmétique et que les distances moyennes obtenues sont visualisés en tant que point d'impact moyen (4') ou écart moyen dans le sens de la trajectoire et/ou transversalement à la trajectoire.

5. Procédé selon une des revendications 1 à 4, caractérisé en ce que pour le calcul de la précision d'atteinte (précision de mouvement réelle), autrement dit de l'erreur angulaire au point (12) du lancer ou du tir, en particulier pour chacun des cycles effectués avec des valeurs de consignes de la vitesse d'entraînement différentes (V), la distance (19) des points d'impact (1) au point-cible (4) est calculée ou pondérée statistiquement, qu'un point d'impact moyen (4) ou une distance moyenne dans le sens de la trajectoire et/ou transversalement à la trajectoire de l'objet (2) est déterminé, que l'écart des différents points d'impact (1), en particulier l'écart moyen des points d'impact par rapport au point d'impact moyen (4') ou à l'écart moyen, dans le sens de la trajectoire et/ou transversalement à la trajectoire, est déterminé ou calculé, que l'écart moyen, dans le sens de la trajectoire et/ou transversalement à la trajectoire, est exprimé en fonction de la vitesse optimale d'entraînement en tant qu'erreur angulaire ($\Delta\alpha$) et/ou ($\Delta\beta$) de l'angle de lancer ou de passe au point (12) de lancer ou de tir et le cas échéant visualisée et que la vitesse de lancer ou de tir moyenne est visualisée ou choisie comme vitesse d'entraînement moyenne pour laquelle on a l'erreur angulaire ($\Delta\alpha$) et/ou ($\Delta\beta$) la plus petite.

6. Procédé selon une des revendications 1 à 5, caractérisé en ce que pour le calcul de l'erreur angulaire ($\Delta\alpha$) et/ou ($\Delta\beta$), l'écart moyen sur le plan de cible (3), dans le sens de la trajectoire et/ou transversalement à la trajectoire, est exprimé en fonction de la longueur de la parabole de la trajectoire ou de la distance (X) entre le point d'envoi ou de lancer (12) et le point-cible (4).

7. Dispositif d'entraînement pour les sports de lancer ou les jeux de balle ou de ballon tels que tennis, ping-pong, handball, comportant un dispositif de mesure de la vitesse d'un objet (2), avantageusement une balle, lancé, tiré, rabattu, envoyé, ou mis de quelque façon en mouvement en direction d'un point-cible (4), à savoir avantageusement une barrière lumineuse (8, 8'; 9, 9') ou des dispositifs de mesure acoustiques, p.ex. des microphones (10, 11) captant le bruit de lancer ou d'impact, un dispositif (5) reconnaissant le point d'impact (1) de l'objet (2) sur le plan de cible (3), p.ex. un mur de rebondissement, et déterminant la position ou la distance (19) de chaque point d'impact (1) au point-cible (4) choisi, ainsi qu'une unité d'évaluation (7), p.ex. un calculateur, pour calculer les distances (19) entre le point-cible (4) et le point d'impact (1) de l'objet (2), les valeurs mesurées par le dispositif de mesure de la vitesse de l'objet lancé ou tiré pouvant être transmises audit dispositif en vue de l'application du procédé selon une des revendications 1 à 6, caractérisé en ce que l'on dispose comme dispositif de reconnaissance d'un dispositif de prise de vue et de traitement d'image (5, 6), p.ex. une caméra électronique, et que l'unité d'évaluation (7) est reliée à une unité de visualisation, p.ex. un écran (14) ou une unité d'enregistrement (15), p.ex. un traceur, de l'erreur angulaire ($\Delta\alpha$) et/ou ($\Delta\beta$), calculée à partir de la distance (X) entre le point de lancer ou de tir (12) et le point-cible (4) (distance de la parabole de la trajectoire) et la moyenne calculée statistiquement des distances (19) des points d'impact (1) de l'objet (2) au point-cible (4), pour l'angle compris entre la trajectoire allant du point (12) de lancer ou d'envoi au point-cible (4) et celle aboutissant à chacun des poins d'impact (1) ou à un point obtenu en faisant la moyenne des distances (19) des points d'impact (1) au point-cible (4).

8. Dispositif selon la revendication 7, caractérisé en ce que la caméra électronique (5) est disposée derrière le point de lancer ou d'envoi (12) par rapport au plan de cible (3), p.ex. un mur de rebondissement, et couvre la zone de tir ou de lancer prévue ainsi que la cible (4).

9. Dispositif selon la revendication 7 ou 8, caractérisé en ce que le point-cible (4) peut être déplacé sur le plan de cible (3) de façon connue, ce pour quoi il est prévu un appareil (13) projetant un rayon de ciblage optique sur le plan de cible (3).

10. Dispositif selon la revendication 9, caractérisé en ce que, pour modifier la position du point-cible (4), l'appareil (13) est relié à un générateur aléatoire donné, déviant le rayon de ciblage ou déterminant le point-cible (4).

**11.** Dispositif selon une des revendications 7 à 10, caractérisé en ce que le dispositif de prise de vue et de traitement d'image (5, 6) est déclenché par un dispositif de reconnaissance optique ou acoustique de l'impact de l'objet (2) sur le plan de cible (3).

**12.** Dispositif selon une des revendications 7 à 11, caractérisé en ce qu'il a été prévu dans l'unité d'évaluation (7) des mémoires pour la position ou les coordonnées des points d'impact (1), pour le ou les point(s)-cible(s) (4), pour les vitesses but mesurées, pour la distance (X) du point de lancer ou de tir (12) au point-cible (4) etc.

Fig. 1

Fig. 2b

Fig. 2a

Fig. 3

Fig. 4

EP 0 486 579 B1